# EUROPÄISCHE PATENTANMELDUNG

(11) **EP 1 147 959 A2**
(43) Veröffentlichungstag der Anmeldung: **24.10.2001**
(21) Anmeldenummer: 00128060.1
(22) Anmeldetag: 21.12.2000
(51) Int. Cl.: B60T 8/00

(54) **Schlupfregelsystem für ein Fahrzeug**

(30) Priorität: 18.04.2000 DE 10019137
(71) Anmelder: ROBERT BOSCH GMBH, 70442 Stuttgart (DE)
(72) Erfinder: Polzin, Norbert, 74374 Zaberfeld (DE); Holl, Eberhard, 71665 Vaihingen (DE)

(57) **Zusammenfassung**

Es wird ein Schlupfregelsystem für Fahrzeuge vorgeschlagen, bei welchem abhängig vom Schlupfzustand wenigstens eines Rades wenigstens eine Steuergröße ermittelt wird, die wenigstens einen veränderlichen Parameter aufweist. Dieser wenigstens eine veränderliche Parameter wird abhängig von der ermittelten Steigung der Fahrbahn, die das Fahrzeug befährt, festgelegt, wobei der wenigstens eine veränderliche Parameter diesen Wert solange beibehält, solange sich der Steigungswert oder ein bestimmter Wertebereich sich nicht wesentlich verändert.

## Beschreibung

### Stand der Technik

Die Erfindung betrifft ein Schlupfregelsystem für ein Fahrzeug.

Aus der DE 44 30 108 Al ist ein Schlupfregelsystem bekannt, bei welchem das Antriebsmoment einer Antriebseinheit des Fahrzeugs in einem vorbestimmten Ausmaß reduziert wird, wenn an wenigstens einem der angetriebenen Räder eine Durchdrehneigung auftritt. Bei der Bestimmung der Größe der Antriebsmomentenreduzierung wird unter anderem auch die Fahrsituation mit berücksichtigt, in der sich das Fahrzeug befindet, beispielsweise, ob sich das Fahrzeug in einer Geradeausfahrt, in einer Kurve oder bei Kurveneintritt befindet. Es hat sich gezeigt, dass die Funktion eines Schlupfregelsystems wegen des zusätzlich wirkenden Hangabtriebs beeinträchtigt sein kann, wenn z.B. am Berg bei einseitiger Glätte angefahren werden muß oder, beispielsweise bei Antiblokkiersystemen, in entsprechender Situation gebremst wird.

Aus diesem Grund werden die relevanten Parameter (z.B. die Schlupfschwellen) als Kompromiss zwischen der Bergsituation und der ebenen Fahrt festgelegt. Somit wird entweder das Regelsystem auf eine Fahrsituation hin optimiert oder in beiden Beeinträchtigungen hingenommen. Der Kompromiss ist daher nicht zufriedenstellend.

### Vorteile der Erfindung

Eine vorteilhafte Verbesserung der Funktion des Schlupfregelsystems ergibt die Auswertung der gemessenen oder abgeschätzten Fahrbahnsteigung, wobei wenigstens ein veränderbarer Parameter des Schlupfregelsystems abhängig von der ermittelten Fahrbahnsteigung im Sinne einer verbesserten Funktion des Schlupfregelsystems bei Bergfahrt angepaßt wird. Besonders vorteilhaft ist, bei Antriebsschlupfregelsystemen den wenigstens einen Parameter derart anzupassen, dass bei Bergfahrt eine verbesserte Traktion des Fahrzeugs dem Fahrer zur Verfügung gestellt wird.

Besonders vorteilhaft ist, dass bei einer Antriebsschlupfregelung mit Motormomenteneingriff abhängig von der Steigung das Antriebsmoment variiert wird, insbesondere mit zunehmender Fahrbahnsteigung mehr Antriebsmoment während der aktiven Antriebsschlupfregelung zugelassen wird. Dadurch wird eine verbesserte Traktion erzielt und somit das Bergfahrverhalten des Fahrzeugs verbessert. Dies gilt vor allem auf Fahrbahnen mit einseitiger Glätte (µ-Split-Fahrbahnen). Als vorteilhaft hat sich erwiesen, die Größe der Momentenrücksprünge mit zunehmender Fahrbahnsteigung geringer und/oder die Größe der Momentenzugabe schneller vorzugeben als bei kleinerer Fahrbahnsteigung.

Entsprechende Maßnahmen sind vorteilhaft, wenn im Rahmen einer Antriebsschlupfregelung auch ein Bremseneingriff vorgesehen ist. In diesem Fall wird der veränderliche Parameter der Schlupfregelung im Sinne größerer Traktion bei größerer Steigung angepaßt. So werden in vorteilhafter Weise die Schwellen, welche zu einem Schlupfregeleingriff führen, bei größerer Steigung vergrößert und/oder der Gradient des Druckaufbaus bzw. -abbaus in der Radbremse abhängig von der Steigung verändert. Dabei werden in vorteilhafter Weise mit größer werdender Fahrbahnsteigung die Gradienten größer, um dem Hangabtrieb schnell entgegenzuwirken. Dabei wird in einem vorteilhaften Ausführungsbeispiel auch ein höheres maximales Druckniveau in der Radbremse zugelassen, um eine gute Traktion des Fahrzeugs zu erreichen.

Besonders vorteilhaft ist, dass der wenigstens eine veränderliche Parameter solange an die Bergfahrt angepaßt bleibt, solange sich das Fahrzeug auf einer Fahrbahn entsprechender Steigung befindet. Dadurch wird nicht nur das Anfahren des Fahrzeugs, sondern auch das weitere Fahrzeugverhalten bei der Bergfahrt wesentlich verbessert.

In vorteilhafter Weise wird durch die beschriebene Vorgehensweise vor allem bei Steigungen mit einseitiger Glätte die Leistungsfähigkeit des Schlupfregelsystems verbessert, weil der durch die Steigung entstehende Hangabtrieb in die Kräfte- und Momentenbilanz mit einbezogen wird. Das Schlupfregelsystem kann dann sowohl für den Anwendungsfall in der Ebene als auch für den der Steigung optimal eingestellt werden.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsschaltbild einer Steuereinrichtung zur Steuerung des Radschlupfes eines Fahrzeugs. In Figur 2 ist anhand eines bevorzugten Ausführungsbeispiels ein Flussdiagramm dargestellt, welches die Realisierung eines Rechnerprogramms skizziert. In Figur 3 wird anhand eines Zeitdiagramms die Wirkungsweise weiter verdeutlicht.

### Beschreibung von Ausführungsbeispielen

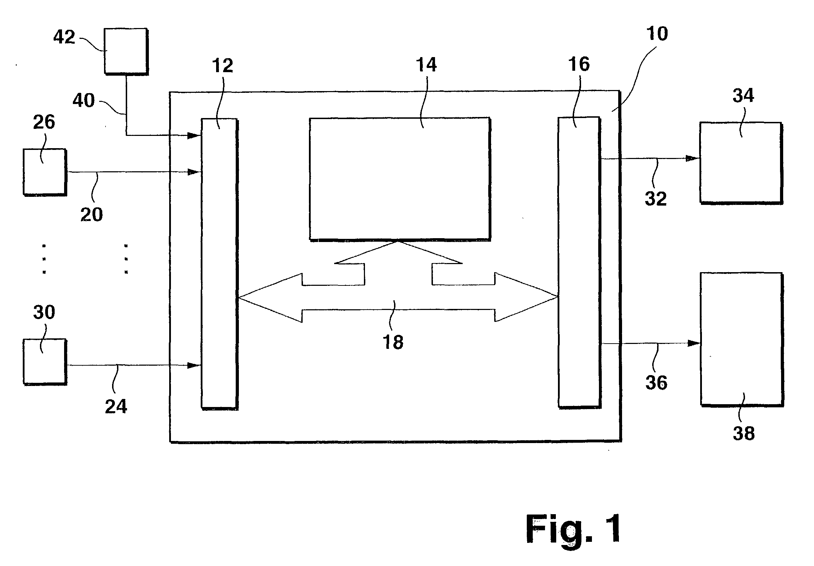

Figur 1 zeigt eine Steuereinrichtung 10, welche wenigstens eine Eingangsschaltung 12, wenigstens einen Mikrocomputer 14 und wenigstens eine Ausgangsschaltung 16 umfaßt. Diese Elemente werden durch ein Kommunikationssystem 18 zum gegenseitigen Datenaustausch miteinander verbunden. Der Eingangsschaltung 12 werden Eingangsleitungen zugeführt, über die Signale zugeführt werden, die Betriebsgrößen des Fahrzeugs repräsentieren oder aus denen solche Betriebsgrößen ableitbar sind. Aus Übersichtlichkeitsgründen sind in Figur 1 lediglich die Eingangsleitungen 20 bis 24 sowie eine Eingangsleitung 40 dargestellt. Über die Eingangsleitungen 20 bis 24 werden von entsprechenden Meßeinrichtungen 26 bis 30 Signale zugeführt, die die Radgeschwindigkeiten repräsentieren. Von einer Meßeinrichtung 42 wird der Eingangsschaltung 12 über die Leitung 40 ein Signal zugeführt, welches die Fahrbahnsteigung repräsentiert bzw. aus dem die Fahrbahnsteigung ableitbar ist. Derartige Meßeinrichtungen sind beispielsweise Neigungssensoren oder Beschleunigungssensoren, aus deren Signal ein Maß für die Fahrbahnsteigung abgeleitet wird. Anstelle dieser Signale wird in einem anderen Ausführungsbeispiel die Fahrbahnsteigung abgeschätzt. Dies erfolgt beispielsweise auf der Basis von Bremsdruckwerten, dem Beschleunigungsverhalten des Fahrzeugs, etc. Je nach Ausführungsbeispiel werden weitere, in Figur 1 nicht dargestellte Größen zugeführt. Dies sind beispielsweise ein die Fahrzeuggeschwindigkeit repräsentierendes Signal und/oder Signale, die die an jedem Rad wirkenden Bremskräfte, Bremsmomente oder Bremsdrücke repräsentieren. Über die Ausgangsschaltung 16 und die daran angebundenen Ausgangsleitungen gibt die Steuereinrichtung 10 Stellgrößen im Rahmen des in ihr realisierten Schlupfregelsystems ab. Wenigstens eine Ausgangsleitung 32 führt zu wenigstens einem Stellelement 34 zur Beeinflussung einer Steuergröße (Leistung, Moment, Drehzahl, Drosselklappenstellung, etc.) der Antriebseinheit des Fahrzeugs. Bei diesem Stellelement 34 handelt es sich um eine Motorsteuereinrichtung, im bevorzugten Ausführungsbeispiel einer Brennkraftmaschine beispielsweise um eine Steuereinrichtung zur Betätigung einer elektrisch betätigbaren Drosselklappe. Ergänzend hierzu oder alternativ wird über wenigstens eine Ausgangsleitung 36 die Bremsanlage 38 des Fahrzeugs betätigt. Je nach Ausführungsbeispiel handelt es sich bei der Bremsanlage mit hydraulischen oder pneumatischen Radbremsen oder mit Radbremsen mit elektromotorischer Bremsenzuspannung.

Im Rahmen eines Antriebsschlupfreglers, im bevorzugten Ausführungsbeispiel, wird bei Durchdrehneigung wenigstens eines Antriebsrades eine Steuergröße (z.B. das Antriebsmoment) der Antriebseinheit des Fahrzeugs auf einen Wert reduziert, der im wesentlichen einem maximal auf die Fahrbahn übertragbarem Moment entspricht. Nach der ggf. durch weitere Reduzierung erreichten Verminderung der Durchdrehneigung wird das Antriebsmoment mit einer bestimmten (zeitlichen) Steigung wieder auf den vom Fahrer gewünschten Wert angehoben. Neben oder anstelle dieses Antriebseingriff findet in einigen Ausführungsbeispielen ein Bremseneingriff am durchdrehenden Rad statt. Die Durchdrehneigung wird in beiden Fällen z.B. dann erkannt, wenn der Schlupf eines Rades jeweils einen (für den Antriebs- und den Bremseneingriff) vorbestimmten Schwellenwert überschreitet.

Beim Antriebsmomenteneingriff wird zunächst das Motormoment um eine bestimmte Größe reduziert bzw. auf einen vorbestimmten Wert zurückgenommen. Dabei wird abhängig von der ermittelten Fahrbahnsteigung die Größe des Rücksprungs bzw. der vorgegebene Wert, auf den das Drehmoment reduziert wird, angepaßt. Die Größe des Rücksprungs wird vorzugsweise um so kleiner, je größer die Fahrbahnsteigung ist bzw. der vorgegebene Wert um so größer, je größer die Fahrbahnsteigung ist. Im weiteren Verlauf der Antriebsschlupfregelung wird das Motormoment weiter reduziert, solange noch Durchdrehneigung vorliegt. Diese Momentenänderung findet dabei mit einer vorgegebenen Schnelligkeit statt. Steigung bzw. die Größe der Reduktion pro Zeitintervall ist vorgegeben. In einem Ausführungsbeispiel wird ergänzend oder alternativ zum vorherstehenden die Größe der Reduktion bzw. die Steigung der Momentenänderung oder deren Schnelligkeit an die Fahrbahnsteigung angepaßt. Je größer die Fahrbahnsteigung ist, desto langsamer ist die Momentenreduzierung. Ist die Durchdrehneigung verschwunden, so wird das Drehmoment der Antriebseinheit wieder erhöht. Auch hier wird die Größe der Erhöhungsschritte bzw. die Steigung der Momentenänderung oder ihre Schnelligkeit ergänzend oder alternativ zum Vorherstehenden an die Fahrbahnsteigung angepaßt, wobei die die Schnelligkeit der Momentenzugabe bei größerer Fahrbahnsteigung größer ist bei kleinerer Fahrbahnsteigung.

Der wenigstens eine veränderbare Parameter (Rücksprungwert, Momentenänderung, etc.) werden abhängig von der ermittelten Fahrbahnsteigung vorgegeben, wobei die Parametergröße beibehalten wird, solange die Fahrbahnsteigung den ermittelten Wert oder Wertebereich aufweist. Dadurch wird nicht nur das Anfahren des Fahrzeugs verbessert, sondern auch das Fahrverhalten während der Antriebsschlupfregelung außerhalb des Anfahrbereichs.

Die Ermittlung der Fahrbahnsteigung erfolgt dabei auf der Basis eines entsprechenden Sensors, beispielsweise eines Neigungs- oder Beschleunigungssensors oder wird auf der Basis von Bremsdruckwerten abgeschätzt. Das ermittelte Fahrbahnsteigungssignal wird dann mittels einer Kennlinie oder mittels einer Tabelle in einen Steigungsfaktor SF umgerechnet, der je nach Ausführungsbeispiele eindeutig mit dem Steigungssignal zusammenhängt oder einen bestimmten Wertebereich der Fahrbahnsteigung repräsentiert. Abhängig von diesem Steigungsfaktor wird die entsprechende Größe des veränderlichen Parameters auf der Basis einer Kennlinie oder einer Tabelle festgelegt und im Programm des Antriebsschlupfreglers entsprechend berücksichtigt.

Bezüglich des zusätzlichen oder alternativen Bremseneingriffs gilt vergleichbares. Bei erkannter Durchdrehneigung wenigstens eines Antriebsrades (auch hier aufgrund eines Vergleiches des Radschlupfes mit einem vorgegebenen Schwellenwert) wird wenigstens ein der Radbremse des Antriebsrades zugeordnetes Stellelement (Ventil) angesteuert, um in der Radbremse Bremsdruck (Bremskraft, Bremsmoment) aufzubauen, Die Schlupfschwelle, die zur Erkennung der Durchdrehneigung verwendet wird, wird abhängig von Betriebsgrößen festgelegt. Erfindungsgemäß wird in einem ersten Ausführungsbeispiel die Größe des Schwellenwertes abhängig von der Fahrbahnsteigung vorgegeben, wobei der Schwellenwert größer wird, je größer die Fahrbahnsteigung ist. Auf diese Weise wird mehr Antriebsschlupf zugelassen und die Traktion des Fahrzeugs verbessert. Solange der Radschlupf den Schlupfschwellenwert übersteigt, wird Bremsdruck aufgebaut. Dies erfolgt je nach Ausführungsbeispiel im einfachsten Fall durch ein Pulssignal mit Pulsen vorbestimmter Länge und vorbestimmter Pulspause. Dadurch entsteht ein vorgegebener Gradient des Druckaufbaus. Ist die Durchdrehneigung verschwunden, wird entsprechend Druck abgebaut. In einem anderen Ausführungsbeispiel werden die Pulslängen derart gewählt, dass mit jedem Puls eine bestimmte Druckänderung im Radbremszylinder erfolgt. Ferner sind kontinuierlich arbeitende Ventile bekannt, deren Öffnung derart eingestellt wird, dass ein vorgegebener Druckaufbau mit einem vorgegebenen Gradienten stattfindet. Ergänzend oder alternativ zum vorherstehenden wird abhängig von der Fahrbahnsteigung der Gradient des Druckaufbaus und/oder des Druckabbaus verändert. Dabei wird der Druckaufbaugradient (und der Betrag des Druckabbaugradienten) um so größer, je größer die Fahrbahnsteigung ist. Die Änderung des Gradienten erfolgt z.B. durch Änderung der Pulslänge, der Pulspause und/oder bei kontinuierlich arbeitenden Ventilen durch eine Änderung des Verstärkungsfaktors, was zu einer vergrößerten Öffnung und somit zu einem steileren Gradienten im Druckaufbau führt. Durch die größeren Druckaufbaugradienten bei größerer Fahrbahnsteigung erfolgt der Druckaufbau (und auch der Druckabbau) schneller, so dass dem Hangabtrieb verbessert entgegengewirkt wird (beim schnelleren Druckabbau wird die Traktion verbessert, da mehr Antriebsmoment auf die Strasse übertragen werden kann). Ergänzend oder alternativ wird auch ein höheres maximales Druckniveau in der Regelung zugelassen, um eine verbesserte Traktion zu erreichen.

Auch hier wird die von der Fahrbahnsteigung abhängige Einstellung des Antriebsschlupfreglers solange beibehalten, solange der entsprechende Steigungswert bzw. Wertebereich vorhanden ist. Wie im Zusammenhang mit der Antriebsmomentenregelung erwähnt, wird dadurch nicht nur das Anfahren, sondern auch das Fahrverhalten im Antriebsschlupfregelfall bei Bergfahrt außerhalb des Anfahrfalls verbessert.

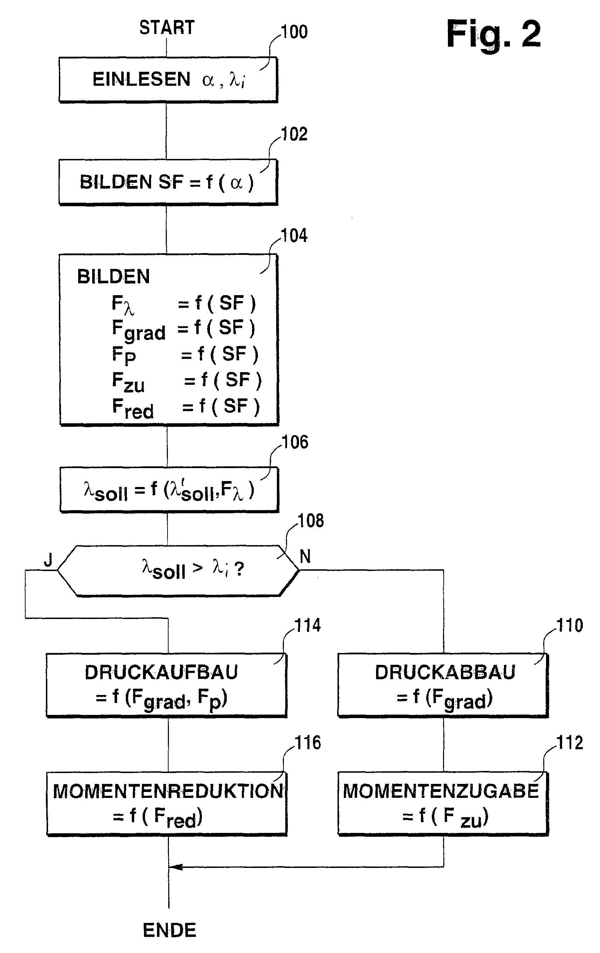

Figur 2 zeigt ein Flussdiagramm, in welchem eine bevorzugte Ausführungsform der oben dargestellten Vorgehensweise dargestellt ist. Das Flussdiagramm skizziert dabei ein Programm, welches im Mikrocomputer der Steuereinheit 10 realisiert ist.

Das Programm wird in vorgegebenen Zeitintervallen bei aktiver Antriebsschlupfregelung durchlaufen. Im ersten Schritt 100 wird die gemessene oder abgeschätzte Fahrbahnsteigung α sowie die Schlupfwerte der Antriebsräder des Fahrzeugs λi eingelesen. Daraufhin wird im Schritt 102 nach Maßgabe eines Kennfeldes oder einer Tabelle der Steigungsfaktor SF auf der Basis der Fahrbahnsteigung α ermittelt. Im darauffolgenden Schritt 104 wird ein Anpassungsfaktor für den wenigstens einen veränderlichen Parameter nach Maßgabe einer Kennlinie oder einer Tabelle abhängig vom Steigungsfaktor SF bestimmt. Als Anpassungsfaktor kommt jeweils einzeln oder in beliebiger Kombination ein Schlupfschwellenfaktor Fλ, ein Druckgradientenfaktor FGRAD, ein Maximaldruckfaktor FP, ein Faktor für die Momentenzugabe FZU und/oder einer für die Momentenreduktion FRED in Frage. Nach Bildung der entsprechenden Faktoren wird im Schritt 106 im bevorzugten Ausführungsbeispiel der Schlupfschwellenwert λSOLL auf der Basis eines ggf. betriebsgrößenabhängigen Grundwertes λSOLL' und des Anpassungsfaktors Fλ (z.B. als Addition oder Multiplikation) bestimmt. Daraufhin wird im Schritt 108 überprüft, ob die Radschlupfwerte λi kleiner als der Schlupfschwellenwert ist. Ist dies der Fall, so wird gemäß den Schritten 110 bzw. 112 ein Druckabbau bzw. eine Momentenzugabe durchgeführt, wobei der Druckgradient des Druckabbaus abhängig vom Druckgradientenfaktor FGRAD ist und/oder die Momentenzugabe abhängig vom Zugabefaktor FZU ist (die entsprechenden Parameter sind mit dem Anpassungsfaktor korrigiert). Danach wird das Programm beendet und, wenn die Regelung nicht beendet ist, zum nächsten Intervall durchlaufen. Ist der Radschlupfwert größer als der Schlupfschwellenwert, so wird gemäß Schritt 114 ein Druckaufbau durchgeführt, dessen Gradienten abhängig vom Gradientenfaktor FGRAD und/oder dessen Druckniveau abhängig vom Maximalfaktor FP ist. Im darauffolgenden Schritt 116 wird ggf. die Momentenreduktion vorgenommen, deren Größe und/oder Schnelligkeit abhängig vom Reduzierfaktor FRED ist.

In dem beschriebenen Beispiel wurde aus Gründen der Einfachheit angenommen, daß beide, Bremseneingriff und Antriebsmomenteneingriff abhängig von derselben Schlupfschwellen aktiviert werden. In der Realität sind die Schlupfschwellen verschieden, so daß die Eingriffe in der Regelung nacheinander aktiviert werden. Nach Schritt 116 wird das Programm beendet und, wenn die Regelung nicht beendet ist, zum nächsten Zeitintervall erneut durchlaufen.

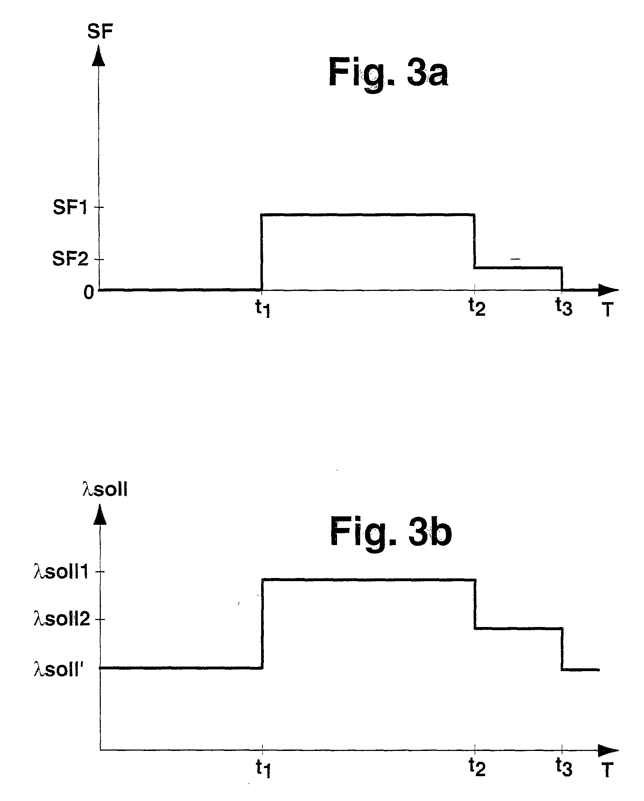

Figur 3 zeigt an einem bevorzugten Ausführungsbeispiel den zeitlichen Verlauf des Steigungsfaktors SF (Figur 3a) sowie des Schlupfschwellenwertes λSOLL (Figur 3b). Bis zu einem Zeitpunkt T1 befindet sich das Fahrzeug auf ebener Fahrbahn. Der Schlupfschwellenwert weist den Wert λSOLL' auf (Figur 3b). Ab dem Zeitpunkt T1 bis zu dem Zeitpunkt T2 befindet sich das Fahrzeug auf einer Fahrbahn mit einer bestimmten Fahrbahnneigung, welche den Steigungsfaktor SF1 ergibt (Figur 3a). In diesem Fall wird im Zeitbereich T1 bis T2 der Schlupfschwellenwert λSOLL auf den Wert λSOLL1 erhöht (Figur 3b). Zum Zeitpunkt T2 läßt die Fahrbahnsteigung nach, so dass der Steigungsfaktor sich auf den Wert SF2 reduziert (Figur 3a). Diese Fahrbahnsteigung liegt bis zum Zeitpunkt T3 vor, so dass im Zeitbereich T2 bis T3 ein Schlupfschwellenwert λSOLL2 vorliegt (Figur 3b). Ab dem Zeitpunkt T3 befindet sich das Fahrzeug wieder auf der Ebene, so dass gemäß Figur 3b der Schlupfschwellenwert λSOLL' vorliegt.

Einen entsprechenden Verlauf, wie er in Figur 3 anhand der Schlupfschwelle dargestellt ist, ergibt sich für den Druckaufbaugradienten und/oder die anderen veränderlichen Parameter.

Die oben beschriebenen Maßnahmen werden jeweils einzeln oder in beliebiger Kombination eingesetzt.

## Patentansprüche

1. Schlupfregelsystem für Fahrzeuge, bei welchem bei Überschreiten eines vorgegebenen Schwellenwertes durch eine das Radverhalten beschreibende Größe ein Eingriff in das Drehmoment einer Antriebseinheit und/oder in die Bremsanlage des Rades stattfindet, wobei wenigstens ein Steuersignal mit wenigstens einem veränderlichen Parameter gebildet wird, **dadurch gekennzeichnet, dass** die Steigung der Fahrbahn, auf der sich das Fahrzeug bewegt, ermittelt wird und der veränderliche Parameter des wenigstens einen Steuersignals abhängig von der ermittelten Steigung festgelegt wird.

2. System nach Anspruch 1, **dadurch gekennzeichnet, dass** der wenigstens eine veränderliche Parameter des wenigstens einen Steuersignals der Schwellenwert für die das Radverhalten beschreibende Größe und/oder der Gradient für den Aufbau von Bremskraft an dem Rad und/oder für deren Abbau und/oder das während des Bremseneingriffs erreichbare maximale Bremskraftniveau ist.

3. System nach Anspruch 2, **dadurch gekennzeichnet, dass** das Schlupfregelsystem ein Antriebsschlupfregler umfaßt, wobei mit größer werdender Fahrbahnsteigung der wenigstens eine Parameter derart verändert wird, dass die Traktion des Fahrzeugs verbessert ist.

4. System nach einem der vorhergehenden Ansprüche, **dadurch gekennzeichnet, dass** der festgelegte Wert des wenigstens einen Parameters solange bestehen bleibt, solange sich die Fahrbahnsteigung nicht ändert bzw. die Änderung in einem vorgegebenen Wertebereich bleibt.

5. System nach einem der Ansprüche 2 bis 4, **dadurch gekennzeichnet, dass** mit größer werdender Fahrbahnsteigung der Schwellenwert größer wird und/oder der Gradient größer wird und/oder das maximale Druckniveau größer wird.

6. System nach einem der vorhergehenden Ansprüche, **dadurch gekennzeichnet, dass** das Schlupfregelsystem einen Antriebsschlupfregler umfaßt, der bei Auftreten einer Durchdrehneigung an wenigstens einem Antriebsrad das Antriebsmoment der Antriebseinheit reduziert und bei Verschwinden der Durchdrehneigung wieder erhöht, wobei die Größe und/oder Schnelligkeit der Reduzierung und/oder die Größe und/oder die Schnelligkeit der Erhöhung von der ermittelten Fahrbahnsteigung abhängig ist.

7. System nach Anspruch 6, **dadurch gekennzeichnet, dass** die Abhängigkeit von der Fahrbahnsteigung derart ist, dass eine verbesserte Traktion erzielt wird.

8. System nach Anspruch 6 oder 7, **dadurch gekennzeichnet, dass** bei großer Fahrbahnsteigung während der Antriebsschlupfregelung mehr Antriebsmoment zugelassen wird.

9. System nach einem der Ansprüche 6 bis 8, **dadurch gekennzeichnet, dass** die Schnelligkeit und/oder Größe der Momentenrücknahme bei größerer Steigung geringer ist und/oder die Momentenzugabe größer und/oder schneller erfolgt als bei kleinerer Fahrbahnsteigung.
